# EUROPÄISCHE PATENTSCHRIFT

(11) **EP 3 034 762 B1**
(45) Veröffentlichungstag und Bekanntmachung des Hinweises auf die Patenterteilung: **10.06.2020**
(21) Anmeldenummer: 14198703.2
(22) Anmeldetag: 17.12.2014
(51) Int. Cl.: E05F 15/608, H02K 1/27, H02K 21/22, H02K 3/52, H02J 1/00

(54) **Karusselltür**
Revolving door
Porte à tambour

(43) Veröffentlichungstag der Anmeldung: 22.06.2016
(73) Patentinhaber: dormakaba Deutschland GmbH, 58256 Ennepetal (DE)
(72) Erfinder: Fabri, Daniel, 58256 Ennepetal (DE); Busch, Sven, 58256 Ennepetal (DE)
(74) Vertreter: Balder IP Law, S.L.

(56) Entgegenhaltungen:
- EP-A2- 2 713 479
- EP-A2- 2 755 305
- WO-A1-2012/024216

## Beschreibung

Die Erfindung betrifft eine Karusselltür mit einem kompakten elektrischen Antrieb.

Bekannt sind Karusselltürantriebe die einen Asynchronmotor mit nachgeschaltetem Getriebe aufweisen. Hierbei kommt typischer Weise ein mehrstufiges Getriebe (Schneckenradgetriebe, Zahnriemenstufen) zum Einsatz. Beispielsweise aus EP 2 072 737 A2 ist ein Antrieb für eine Karusselltür bekannt, wobei das Drehmoment eines herkömmlichen elektrischen Antriebes über ein Umlenkgetriebe auf die Karusselltür übertragen wird. Eine Karusselltür gemäß dem Oberbegriff des Anspruchs 1 ist außerdem aus der EP 2 755 305 A2 bekannt.

Es ist Aufgabe vorliegender Erfindung eine Karusselltür anzugeben, die bei kostengünstiger Herstellung und Montage einen kompakten Antrieb mit hoher Leistungsdichte und flexiblen Einsatzmöglichkeiten für unterschiedlichen Karusselltürvarianten umfasst.

Die Lösung der Aufgabe erfolgt durch die Merkmale des unabhängigen Anspruchs. Die abhängigen Ansprüche haben vorteilhafte Ausgestaltungen der Erfindung zum Gegenstand.

Somit wird die Aufgabe gelöst durch eine Karusselltür umfassend ein Drehkreuz mit zumindest zwei Türflügeln, wobei das Drehkreuz um eine Drehachse drehbar ist, wobei entlang der Drehachse eine Axialrichtung und senkrecht zur Axialrichtung eine Radialrichtung definiert sind, und einen elektrischen Antrieb, ausgebildet als elektronisch kommutierter Vielpolmotor mit einem Stator und einem Rotor. Der Stator umfasst ein Statorblechpaket und mehrere Spulen. Der Rotor umfasst ein Rotorblechpaket und mehrere Permanentmagneten. Der Rotor ist koaxial zur Drehachse angeordnet, und mit dem Drehkreuz zum direkten, getriebelosen Antrieb verbunden.

Erfindungsgemäß wurde erkannt, dass durch einen elektronisch kommutierten Vielpolmotor ein sehr kompakter und wartungsarmer Antrieb für eine Karusselltür möglich ist. Die entsprechend hohe Leistungsdichte des Antriebs wird erreicht durch die Verwendung von Blechpaketen für den Stator und für den Rotor.

Im Folgenden werden einige Begriffe zur erfindungsgemäßen Karusselltür definiert: Das Drehkreuz einer Karusselltür umfasst üblicherweise mehrere Türflügel, die sternförmig zur Drehachse angeordnet sind. Der Drehkreuzdurchmesser A ist dabei der größte Durchmesser des Kreises, den diese Türflügel beim Drehen des Drehkreuzes überstreichen. Entlang der Drehachse ist die Axialrichtung der Karusselltür definiert. Senkrecht zu dieser Axialrichtung steht die Radialrichtung. Um die Axialrichtung ist die Umfangsrichtung definiert.

Der Antrieb, ausgebildet als Vielpolmotor, weist einen Stator mit einer gewissen Spulenanzahl F auf. Der Statordurchmesser M wird bis zum radial äußeren Ende des Statorblechpaketes gemessen. Der Rotor umfasst ein Rotorblechpaket, das auf einer Rotorscheibe montiert ist. Ebenso umfasst der Stator eine Statorscheibe, wobei auf der Statorscheibe ein Statorblechpaket montiert ist. Die Statorscheibe kann aus mehreren Scheibenblechen zusammengesetzt sein. Die Statorscheibe und die Rotorscheibe liegen gegenüber, so dass zwischen den beiden Scheiben die Statorblechpakete und die Rotorblechpakete angeordnet sind.

Im Rotor sind radial innen am Rotorblechpacket mehrere Permanentmagneten angeordnet. Der Rotordurchmesser B ist bis zu dem radial äußeren Ende des Rotorblechpaketes definiert. Eine Antriebshöhe C des elektrischen Antriebes wird in Axialrichtung von einer äußeren Seite der Statorscheibe bis zu einer äußeren Seite der Rotorscheibe gemessen.

Die Permanentmagneten stehen in Axialrichtung über das Statorblechpaket über. Durch diesen axialen Versatz (erster Überstand) der Permanentmagneten zum Statorblechpaket wird der Rotor allein durch die Magnetkraft an dem Stator gehalten bzw. montiert. Dies ist insbesondere vorteilhaft, da der Rotor sich im Betrieb der Drehtür unterhalb des Stators befindet. Auf eine zusätzliche Befestigung oder Fixierung zwischen Stator und Rotor in Axialrichtung wird bevorzugt bewusst verzichtet; ohne den Überstand und die Magnetkraft würde der Rotor sich in axialer Richtung verschieben und der Antrieb wäre nicht funktionsfähig. Der Verzicht auf die zusätzliche Befestigung oder Fixierung ermöglicht die Verwendung einer einfachen Lagerung zwischen Rotor und Stator, da die Gewichtskraft des Rotors nicht gegenüber dem Stator abgestützt werden muss.

Der erste Überstand beträgt vorteilhafterweise zumindest 2mm, vorzugsweise zumindest 4mm, besonders vorzugsweise zumindest 6mm. Der Überstand von zumindest 2mm sorgt für eine ausreichende Magnetkraft zum Halten des Rotors. Aus Kosten- und Bauraumgründen wird der Überstand vorteilhafterweise begrenzt: So beträgt der erste Überstand vorteilhafterweise höchstens 20mm.

Erfindungsgemäß ist vorgesehen, dass die Permanentmagneten nicht nur auf einer Seite überstehen (erster Überstand), sondern auch an der gegenüberliegenden Seite in Axialrichtung über das Rotorblechpaket überstehen (zweiter Überstand). In der Karusselltür wird der Antrieb mit senkrecht stehender Drehachse eingebaut. Dadurch gibt es eine Unter- und eine Oberseite für die Permanentmagneten. An der Oberseite stehen die Permanentmagneten mit dem zweiten Überstand über das Rotorblechpaket über. Dieser zweite Überstand der Permanentmagneten kann gut zur Erfassung der Permanentmagneten mittels berührungslosen Sensoren, beispielsweise Hall-Sensoren, genutzt werden. Mit den Daten der Sensoren erfolgt eine Erfassung der Position der Permanentmagnete des Rotors. Aus diesen Positions-Daten kann unter anderem die Drehgeschwindigkeit berechnet werden. Durch die Qualität dieser Sensordaten wird das Laufverhalten des Motors stark beeinflusst, da auf Basis dieser Daten der Antrieb kommutiert wird.

Die absolute Position des Rotors wird vorzugsweise über einen zusätzlichen Magneten auf der Innenseite der Rotorscheibe und einen zusätzlichen Sensor, vorzugsweise Hall-Sensor, bestimmt. Diese Positionserfassung ermöglicht ein sehr exaktes Positionieren des Drehkreuzes in einer gewünschten Stellung.

Das Statorblechpaket umfasst bevorzugt einen geschlossenen Ring, an dem in Radialrichtung mehrere Zähne ausgebildet sind. Dabei ist das Statorblechpaket bevorzugt aus mehreren gestapelten Statorringen zusammengesetzt. Die einzelnen Statorringe sind in Axialrichtung übereinander gestapelt. Auf die Zähne des Statorblechpaketes wird jeweils eine Spule aufgesteckt. Die einzelnen Statorringe bilden sowohl einen Teil der Zähne als auch einen Teil des geschlossenen Rings. Die Zähne bilden dabei den Eisenkern der aufgesteckten Spulen und dienen gleichzeitig zur Positionierung und Fixierung der Spulen im Stator. Der einzelne Statorring kann in mehrere Statorsegmente unterteilt werden. In Umfangsrichtung werden die Statorsegmente aneinander gesetzt, so dass beispielsweise drei, vier oder fünf Statorsegmente einen Statorring bilden.

Das Rotorblechpaket ist bevorzugt als geschlossener Ring gestaltet, an dessen radialer Innenseite die Permanentmagneten angeordnet sind. Dabei ist das Rotorblechpaket bevorzugt aus mehreren gestapelten Rotorringen zusammengesetzt. Die einzelnen Rotorringe sind in Axialrichtung übereinander gestapelt. Der einzelne Rotorring ist bevorzugt in mehrere Rotorsegmente unterteilt. In Umfangsrichtung werden die Rotorsegmente aneinander gesetzt, so dass beispielsweise drei, vier oder fünf Rotorsegmente einen Rotorring bilden.

Bevorzugt ist vorgesehen, dass an der radialen Innenseite des Rotorblechpaketes mehrere Positionierungsfortsätze, vorzugsweise als integrale Bestandteile der Rotorsegmente, ausgebildet sind, wobei jeweils zwischen zwei Positionierungsfortsätzen ein Permanentmagnet angeordnet ist.

Die Permanentmagneten halten an dem Rotorblechpaket nur durch ihre magnetische Kraft. Wie noch beschrieben wird, kann der Zwischenraum zwischen den einzelnen Permanentmagneten mit Klebstoff gefüllt werden. Für eine einfache Montage und für eine sichere Positionierung der Permanentmagneten am Rotorblechpaket sind vorzugsweise am Rotorblechpaket Positionierungsfortsätze ausgebildet. Diese Positionierungsfortsätze sind an der radialen Innenseite des Rotorblechpaketes ausgebildet und sind insbesondere integraler Bestandteil des Rotorblechpaketes. Weitere Bauteile oder Lehren sind für die Montage der Permanentmagneten nicht nötig. Vorteilhafterweise weisen einzelne oder alle Rotorsegmente einen Teil der Positionierungsfortsätze auf. Jeweils zwischen zwei Positionierungsfortsätzen wird ein Permanentmagnet angeordnet. Die Permanentmagneten sind somit in Umfangsrichtung durch die Positionierungsfortsätze voneinander beabstandet. Bevorzugt wird eine Vielzahl an einzelnen Permanentmagneten verwendet, wobei die Anzahl der Permanentmagneten vorzugweise höchstens um 40% von der Spulenanzahl abweicht.

Die Permanentmagneten sind in Umfangsrichtung, beispielsweise durch die Positionierungsfortsätze, bevorzugt voneinander beabstandet. Bevorzugt ist vorgesehen, dass in diesem Abstand zwischen den Permanentmagneten ein Kunststoff oder ein Klebstoff eingebracht wird. Dadurch wird verhindert, dass die Permanentmagneten in Umfangsrichtung verrutschen.

An ihrer radialen Außenseiten liegen die Permanentmagneten vorteilhafterweise direkt am Rotorblechpaket an. Zwischen der radialen Außenseite der Permanentmagneten und der radialen Innenseite des Rotorblechpaketes ist vorteilhafterweise keine stoffschlüssige Verbindung vorgesehen. Die Permanentmagneten halten hier allein durch ihre magnetische Kraft. Ein Verrutschen in Umfangsrichtung kann jedoch alternativ durch ein flächiges Verkleben der radialen Außenseiten der Permanentmagneten mit dem Rotorblechpaket verhindert werden.

Das Rotorblechpaket ist insgesamt ringförmig und an seiner radialen Außenseite vorteilhafterweise rund. Allerdings sind bevorzugt an der radialen Innenseite des Rotorblechpaketes ebene, zueinander leicht abgewinkelte Auflageflächen für die Permanentmagneten ausgebildet. Dadurch können kostengünstige, ebene Permanentmagneten verwendet werden. Die Permanentmagneten müssen somit keine Rundung für ein flächiges Anliegen am Rotorblechpaket aufweisen. Insbesondere werden einfach zu fertigende Permanentmagneten verwendet, die sowohl an ihrer radialen Innenseite als auch an ihrer radialen Außenseite eben sind.

Für eine Positionierung und Fixierung der Permanentmagneten in axialer Richtung ist vorzugsweise zumindest ein axialer Anschlag für die Permanentmagneten am Rotor ausgebildet. Insbesondere befindet sich dieser axiale Anschlag an der Rotorscheibe zugewandten Seite der Permanentmagneten.

Zur Bildung des axialen Anschlags kann zumindest ein Rotorring, vorzugsweise gebildet durch mehrere Rotorsegmente, radial nach innen ragen, sodass die Permanentmagneten auf diesem Rotorring aufliegen. Dabei kann der gesamte Rotorring nach innen ragen und somit eine breite Auflagefläche für die Permanentmagneten bieten.

Alternativ sind lediglich kleine Vorsprünge an dem zumindest einen Rotorring vorgesehen. Insbesondere ist dann pro Permanentmagnet ein eigener axialer Anschlag vorgesehen. Diese kleinen Vorsprüche sind vorzugsweise die Positionierungsfortsätze. Dadurch können die Rotorsegmente alle baugleich sein. Die Befestigungslöcher sind jedoch nicht spiegelsymmetrisch angeordnet, sodass durch Umdrehen der Rotorsegmente die Positionierungsfortsätze genau unter dem Magnetelement liegen und somit den axialen Abstand herstellen.

In einer weiteren Alternative wird zumindest ein Abstandselement unterhalb der Permanentmagneten eingesetzt. Vorzugsweise wird hierzu ein Kunststoffring oder mehrere Kunststoffsegmente verwendet.

Nachfolgend wird die Erfindung anhand der begleitenden Zeichnungen im Detail erläutert. Dabei zeigen:
- Fig. 1: eine erfindungsgemäße Karusselltür gemäß einem Ausführungsbeispiel,
- Fig. 2: eine Schnittansicht des Antriebs der erfindungsgemäßen Karusselltür,
- Fig. 3: ein Detail zu Fig. 2,
- Fig. 4: den Stator des Antriebs,
- Fig. 5: ein Statorsegment des Antriebs,
- Fig. 6: einen teilweise montierten Stator,
- Fig. 7: den Rotor des Antriebs,
- Fig. 8: ein Rotorsegment,
- Fig. 9: eine Detailansicht des Rotors,
- Fig. 10: einen teilweise montierten Rotor,
- Fig. 11: ein Detail des Stators,
- Fig. 12: eine Spulenkette des Stators,
- Fig. 13: einen Spulenkörper für die Spulen des Stators,
- Fig. 14: ein Detail des Antriebs gemäß einer ersten Variante,
- Fig. 15: ein Detail des Antriebs gemäß einer zweiten Variante,
- Fig. 16: ein Detail des Antriebs mit Anschlusssteckern, und
- Fig. 17-22: unterschiedliche Varianten zur Positionierung der Permantmagneten im Rotor.

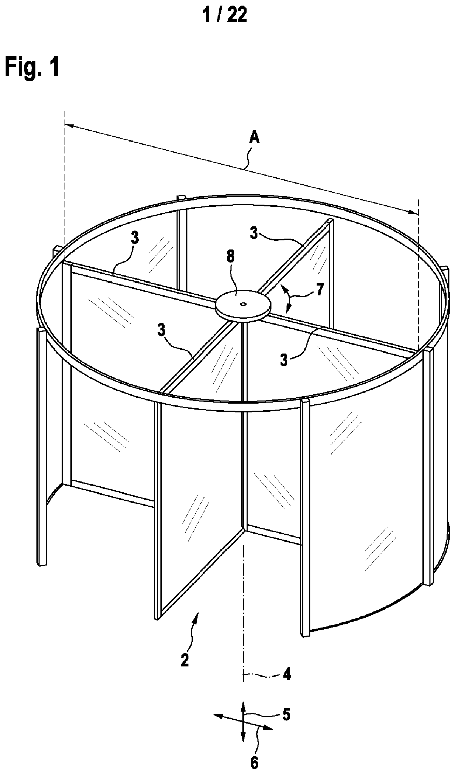

Im Folgenden wird anhand der Fig. 1 bis 22 ein Ausführungsbeispiel einer erfindungsgemäßen Karusselltür 1 gemäß vorliegender Erfindung erläutert.

Fig. 1 zeigt eine isometrische Ansicht der Karusselltür 1. Die Karusselltür 1 umfasst ein Drehkreuz 2. Dieses Drehkreuz 2 weist vier Türflügel 3 auf. Die Türflügel 3 sind jeweils um 90° zueinander abgewinkelt. Das Drehkreuz 2 ist um eine Drehachse 4 drehbar angeordnet. Die Drehachse 4 streckt sich in Axialrichtung 5. Senkrecht zur Axialrichtung 5 ist eine Radialrichtung 6 definiert. Um die Axialrichtung 5 ist eine Umfangsrichtung 7 definiert.

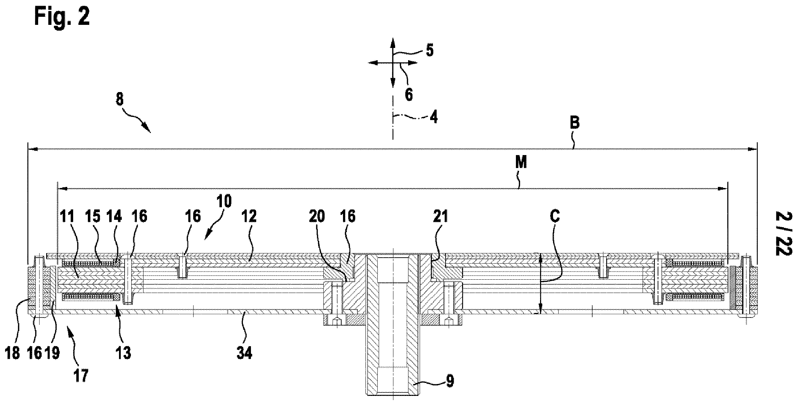

Auf dem Drehkreuz 2 ist ein Antrieb 8 angeordnet. Dieser Antrieb 8 ist als elektronisch kommutierter Vielpolmotor ausgebildet. Der Rotor 17 (s. Fig. 2 ff.) dieses Antriebs 8 ist koaxial zur Drehachse 4 mit dem Drehkreuz 2 verbunden. Dadurch ermöglicht der Antrieb 8 einen direkten und getriebelosen Antrieb des Drehkreuzes 2.

Gemäß Fig. 1 weist das Drehkreuz 2 mit seinen Türflügeln 3 einen größten Drehkreuzdurchmesser A auf. Der Durchmesser A ist in Radialrichtung 6, also senkrecht zur Axialrichtung 5, definiert.

Fig. 2 zeigt einen Schnitt durch den Antrieb 8. Der Antrieb 8 umfasst einen Stator 10 und den Rotor 17. Wie Fig. 1 zeigt, ist der Antrieb 8 über dem Drehkreuz 2 angeordnet. Dabei befindet sich der Rotor 17 zwischen dem Drehkreuz 2 und dem Stator 10. Entgegen der gezeigten Ausführungsform kann der Antrieb 8 auch unter dem Drehkreuz 2 angeordnet werden, wobei dann ebenfalls der Rotor 17 zwischen Stator 10 und Drehkreuz 2 angeordnet wird.

Fig. 2 zeigt ein drehfest mit dem Rotor 17 verbundenes Abtriebselement 9. Über dieses Abtriebselement 9 ist das Drehkreuz 2 drehfest mit dem Rotor 17 verbunden. Dieses Abtriebselement 9 dient insbesondere zur drehfesten Verbindung von herkömmlichen Drehkreuzen 2 mit dem erfindungsgemäßen Antrieb 8. Bei einer speziellen Konstruktion des Drehkreuzes 2 für den gezeigten Antrieb 8, kann das Drehkreuz 2, insbesondere die einzelnen Türflügel 3, auch direkt mit dem Rotor 17, ohne separatem Abtriebselement 9 verbunden werden.

Der Stator 10 umfasst eine Statorscheibe 12. Am äußeren Umfang der Statorscheibe 12 ist ein Statorblechpaket 11 angeordnet. Auf diesem Statorblechpaket 11 stecken die einzelnen Spulen 13 des Stators 10.

Jede Spule umfasst einen Spulenkörper 14, beispielsweise aus Kunststoff. Auf diesem Spulenkörper 14 befinden sich die Wicklungen 15 der einzelnen Spule 13.

Über Verbindungselemente 16, hier ausgebildet als Schließringbolzensysteme, ist das Statorblechpaket 11 mit der Statorscheibe 12 verbunden.

Der Rotor 17 umfasst eine Rotorscheibe 34. Diese Rotorscheibe 34 liegt der Statorscheibe 12 gegenüber. Zwischen den beiden Scheiben 34, 12 ist das Statorblechpaket mit den Spulen 13 angeordnet.

Am äußeren Umfang der Rotorscheibe 34 ist ein Rotorblechpaket 18 angeordnet. Dieses Rotorblechpaket 18 ist über Verbindungselemente 16 in Form von Schließringbolzensystemen mit der Rotorscheibe 34 verbunden.

Radial innerhalb des Rotorblechpaketes 18 sind auf dem Rotorblechpaket 18 mehrere Permanentmagneten 19 angeordnet.

Im Bereich der Drehachse 4 sind zwischen der Statorscheibe 12 und der Rotorscheibe 34 ein Axiallager 20 und ein Radiallager 21 ausgebildet. Im gezeigten Ausführungsbeispiel sind das Axiallager 20 und das Radiallager 21 als Gleitlager ausgebildet.

Ferner zeigt Fig. 2 einen größten Rotordurchmesser B senkrecht zur Axialrichtung 5 sowie einen größten Statordurchmesser M, ebenfalls senkrecht zur Axialrichtung 5. Der Statordurchmesser M ist dabei bis zu den äußeren Enden des Statorblechpaketes 11 definiert.

Fig. 2 zeigt für den Antrieb 8, dass aufgrund der Verwendung des Statorblechpaketes 11 und des Rotorblechpaketes 18 eine sehr hohe Leistungsdichte für den Antrieb 8 möglich ist. Dadurch kann der Antrieb relativ klein konstruiert werden. Dies bezieht sich sowohl auf den Rotordurchmesser B als auch auf eine Antriebshöhe C, welche in Axialrichtung 5 definiert ist.

Wie in Zusammenschau mit Fig. 1 zu erkennen ist, ermöglicht der Antrieb 8 mit relativ kleinem Rotordurchmesser B größtmögliche Gestaltungsfreiheit für die Deckenkonstruktion über der Karusselltür 1. Der Großteil des Deckenbereiches über der Karusselltür 1 kann absolut frei, beispielsweise transparent mit Glasscheiben gestaltet werden. Lediglich eine kleine Fläche ist hier durch den Antrieb 8 bedeckt.

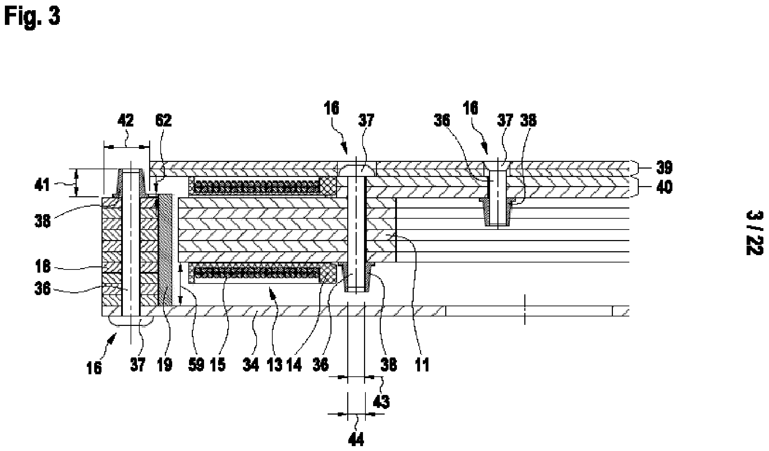

Fig. 3 zeigt einen Detailausschnitt zu Fig. 1. In dieser Darstellung ist die genaue Ausgestaltung der Verbindungselemente 16 als Schließringbolzensystem zu sehen.

Für die Verbindungselemente 16 werden Bolzen 36 verwendet. Die Bolzen 36 weisen Köpfe 37 auf. Die Köpfe 37 sind entweder linsenförmig oder als Senkköpfe ausgebildet. An den den Köpfen 37 gegenüberliegenden Enden der Bolzen 36 werden Schließringe 38 aufgepresst. Bevor diese Schließringe 38 aufgepresst werden, werden die Bolzen 36 in Axialrichtung 5 vorgespannt.

Wie Fig. 3 zeigt, ist die Statorscheibe 12 aus einzelnen Scheibenblechen 39, 40 zusammengesetzt. Die Verbindungselemente 16 werden nicht nur zur Verbindung der Blechpakete (Statorblechpaket 11 und Rotorblechpaket 18) untereinander, sondern auch zur Verbindung der Blechpakete mit der Statorscheibe 12 bzw. der Rotorscheibe 34 verwendet, als auch zur Verbindung der einzelnen Scheibenbleche 39, 40.

Fig. 3 zeigt ferner einen Bolzendurchmesser 43 der Bolzen 36 sowie einen Verbindungslochdurchmesser 44 der Verbindungslöcher 27, in denen die Bolzen 36 stecken. Der Verbindungslochdurchmesser 44 ist etwas größer gewählt als der Bolzendurchmesser 43. Es ist zu beachten, dass das Schließringbolzensystem den Vorteil hat, dass die Bolzen 36 in Axialrichtung vorgespannt werden und die Verbindungslöcher 27 nicht ausfüllen. Es verbleibt also bei der Montage ein gewisses Spiel zum Verschieben der einzelnen Bleche untereinander.

Fig. 3 zeigt ferner einen begrenzten axialen Bauraum 41 und einen radialen Bauraum 42 der hier für die Schließringe 38 zur Verfügung steht. Die Permanentmagneten 19 ragen mit einem ersten Überstand 59 weiter in Axialrichtung 5 als das Statorblechpaket 11. Auf der gegenüberliegenden Seite stehen die Permanentmagneten 19 mit einem zweiten Überstand 62 über das Rotorblechpaket 18 über.

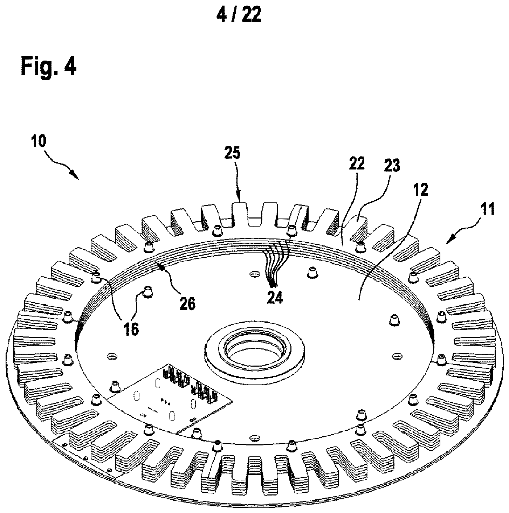

Fig. 4 zeigt den Stator 10 ohne den aufgesteckten Spulen 13. Gemäß Fig. 4 umfasst das Statorblechpaket 11 einen geschlossenen Ring 22, von dem in Radialrichtung 6 nach außen mehrere Zähne 23 abstehen. Auf diese Zähne 23 werden die Spulenkörper 14 aufgesteckt.

Das Statorblechpaket 11 ist zusammengesetzt aus mehreren, übereinandergestapelten Statorringen 24. Der einzelne Statorring 24 wiederum ist zusammengesetzt aus beispielsweise vier Statorsegmenten 25.

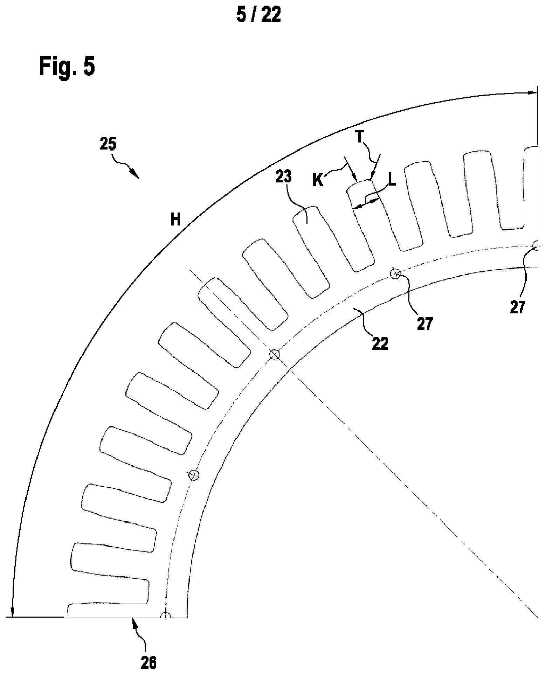

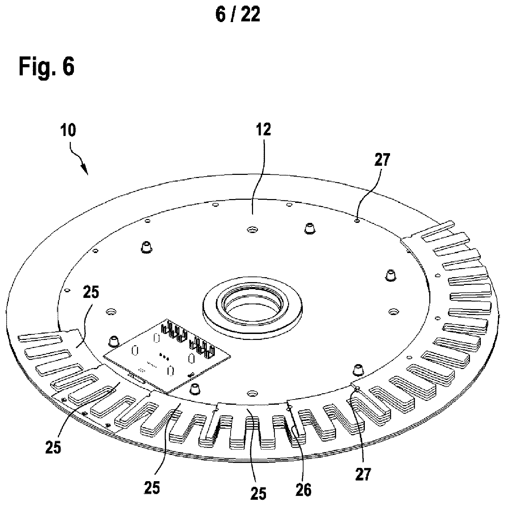

Fig. 5 zeigt im Detail eines der Statorsegmente 25. Fig. 6 zeigt, wie die einzelnen Statorsegmente 25 versetzt zueinander angeordnet werden. Jeweils zwischen zwei Statorsegmenten 25 entsteht ein Stoß 26. In den Statorsegmenten 25 sind Verbindungslöcher 27 vorgesehen. Durch diese Verbindungslöcher 27 werden die Bolzen 36 der Verbindungselemente 16 gesteckt.

Fig. 5 zeigt den Segmentwinkel H, den Kopfradius K des einzelnen Zahns 23, den Eckenradius T des einzelnen Zahns 23 sowie die Zahnbreite L des einzelnen Zahns 23.

Der Kopfradius K und der Eckenradius T werden entsprechend ausgebildet, um möglichst wenig Rastmoment zu erzeugen. Die Zahnbreite L ist in der Mitte des Zahns 23 etwas vergrößert. Dadurch klemmen die aufgesteckten Spulenkörper 14 auf den Zähnen 23.

Wie insbesondere Fig. 6 zeigt, liegen die Stöße 26 in der Mitte des einzelnen Zahns 23. Des Weiteren werden die Statorsegmente 25 versetzt zueinander angeordnet, so dass die Stöße 26 der einzelnen Statorringe 24 sich nicht überlappen. Dies hat entsprechend positive Auswirkungen auf den magnetischen Fluss im Statorblechpaket 11.

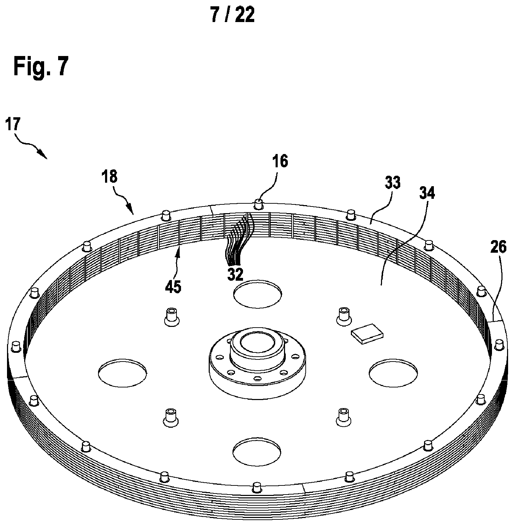

Fig. 7 zeigt im Detail den Rotor 17 ohne den Permanentmagneten 19. Das Rotorblechpaket 18 ist, ähnlich wie das Statorblechpaket 11, zusammengesetzt aus übereinandergestapelten Rotorringen 32. Die einzelnen Rotorringe 32 wiederum sind aus Rotorsegmenten 33 zusammengesetzt. Zwischen den Rotorsegmenten 33 entstehen Stöße 26. In den Rotorsegmenten 33 sind entsprechende Verbindungslöcher 27 vorgesehen. Durch diese Verbindungslöcher 27 werden die Bolzen 36 (s. Fig. 3) gesteckt.

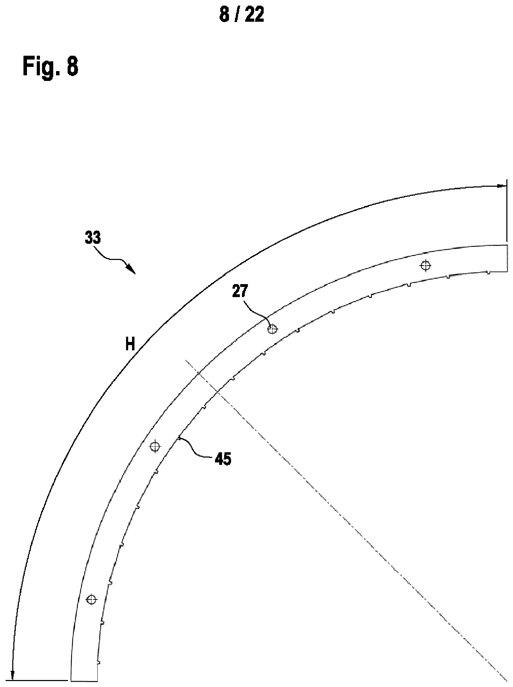

Fig. 8 zeigt im Detail ein einzelnes Rotorsegment 33 mit dessen Segmentwinkel H.

Radial innen an den Rotorsegmenten 33 sind Positionierungsfortsätze 45 ausgebildet. Diese Positionierungsfortsätze 45 sind hier kleine, radial nach innen ragende Nasen.

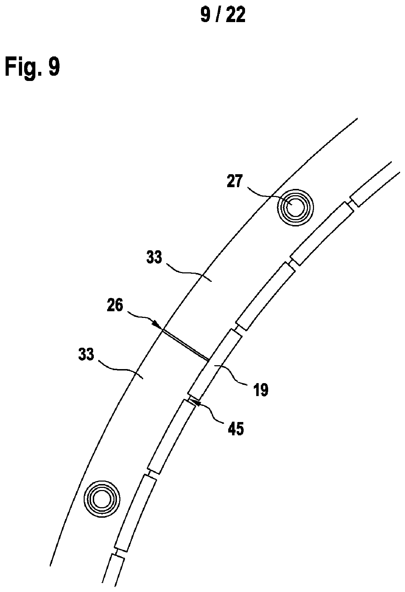

Wie insbesondere die Zusammenschau von Fig. 9 und Fig. 7 zeigt, bilden diese Positionierungsfortsätze 45 im zusammengesetzten Zustand des Rotorblechpaketes 18 kleine Stege zwischen den einzelnen Permanentmagneten 19. Die Positionierungsfortsätze 45 sorgen für den definierten Abstand der einzelnen Permanentmagneten 19 zueinander.

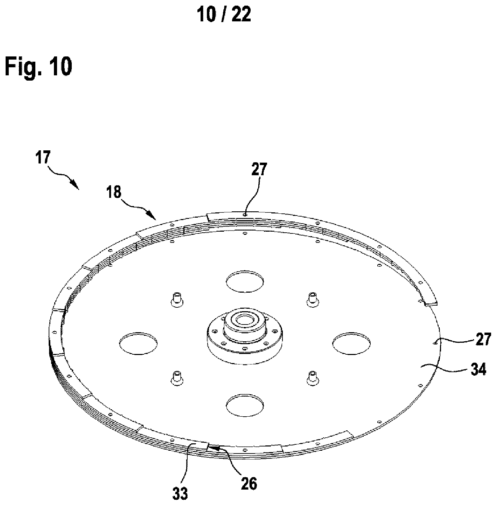

Fig. 10 zeigt einen teilmontierten Zustand des Rotorblechpaketes 18. Ähnlich wie bei dem Statorblechpaket 11 werden auch hier die einzelnen Rotorsegmente 33 versetzt zueinander angeordnet, so dass die Stöße 26 einzelner Rotorringe 32 nicht überlappen. Dies wirkt sich positiv auf den magnetischen Fluss aus.

Der Segmentwinkel H der Statorsegmente 25 und der Rotorsegmente 33 ist geringfügig kleiner als 360°/Segmentanzahl. Die einzelnen Segmente 25, 33 werden in Position gebracht und über die Verbindungselemente 16 fixiert. Dabei ist der Bolzendurchmesser 43 kleiner als der Verbindungslochdurchmesser 44 (s. Fig. 3). Dadurch ist ein gewisses Spiel bei der Montage möglich.

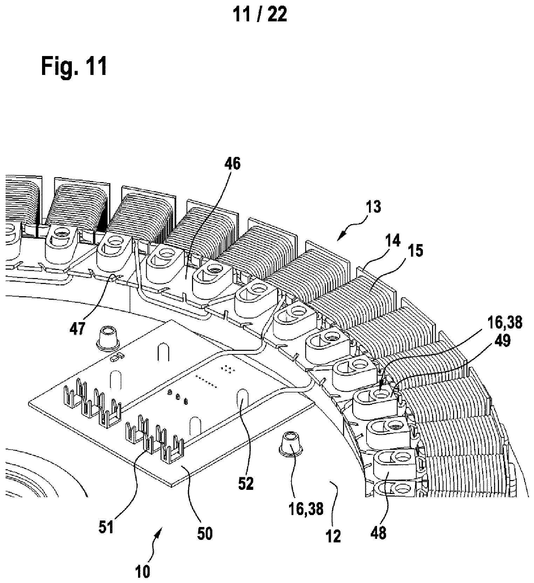

Fig. 11 zeigt ein Detail des Stators 10. Anhand dieser Darstellung ist gut zu erkennen, dass radial innerhalb der einzelnen Spulen 13 sogenannte Drahtführungselemente 46, insbesondere aus Kunststoff, aufgesetzt sind. Diese Drahtführungselemente 46 führen die Drähte zwischen den einzelnen Spulen 13. Hierzu weisen die Drahtführungselemente 46 Schlitze 47 auf, in die die Drähte eingesteckt werden können.

Auf der Statorscheibe 12, in dem Hohlraum zwischen der Statorscheibe 12 und der Rotorscheibe 34, befindet sich eine Leiterplatte 50. Auf dieser Leiterplatte 50 sind Schneidklemmen 51 angeordnet. In diese Schneidklemmen 51 können die Drähte eingesteckt werden. Dabei erfolgt durch die Funktion der Schneidklemmen 51 gleichzeitig ein Abisolieren der Drähte als auch ein Kontaktieren der Drähte. Über Rastverbindungen 52 ist die Leiterplatte 50 mit der Statorscheibe 12 verbunden.

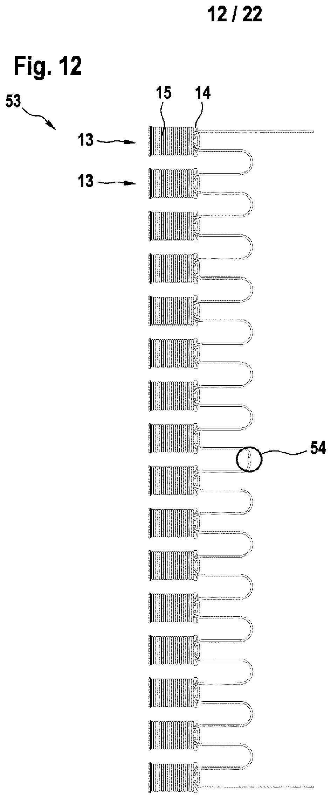

Für eine einfache Herstellung und Montage werden Spulenketten 53 gemäß Fig. 12 verwendet. Die einzelne Spulenkette 53 weist mehrere Spulenkörper 14 auf. Der Draht wird jeweils um einen Spulenkörper 14 gewickelt und führt zum nächsten Spulenkörper 14 und wird wiederum zu einer Spule 13 gewickelt. Dadurch entstehen mehrere zusammenhängende Spulen 13 inkl. Spulenkörper 14. Diese Spulenketten 43 können sehr einfach auf das Statorblechpaket 11 montiert werden. Über gelötete Verbindungstellen 54 können die Drähte mehrere Ketten verbunden werden.

Nach dem Aufstecken der Spulenketten 53 werden die Drähte zwischen den Spulen 13 in die entsprechenden Schlitze 47 der Drahtführungselemente 46 eingesteckt.

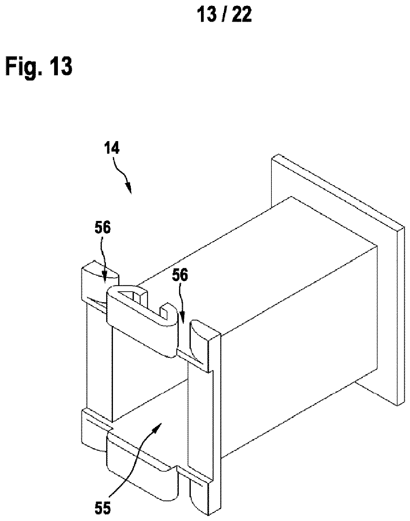

Fig. 13 zeigt im Detail einen der Spulenkörper 14. Im Spulenkörper 14 sind durch entsprechend abgerundete Schlitze Drahtein-/-ausläufe 56 vorgesehen, um den Draht definiert in den gewickelten Zustand überzuführen. Im Inneren der Spulenkörper 14 ist ein entsprechender Hohlraum 55 vorgesehen. In diesen Hohlraum 55 ragt im montierten Zustand ein Zahn 23.

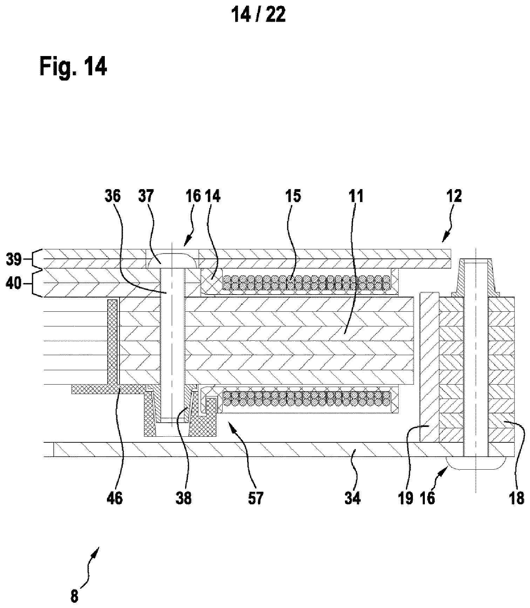

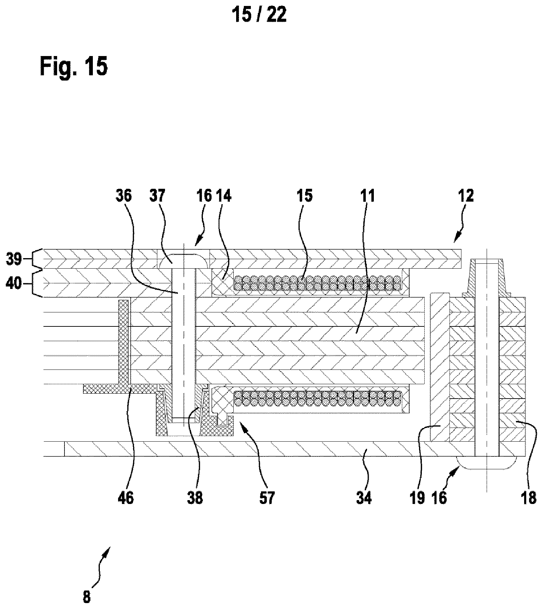

Fig. 14 und 15 zeigen in Schnittansichten zwei mögliche Varianten für die genaue Ausbildung der Drahtführungselemente 46. In beiden Varianten gibt es eine direkte formschlüssige Verbindung 57 zwischen dem Drahtführungselement 46 und dem Spulenkörper 14. Gemäß Fig. 14 ragt ein Fortsatz des Drahtführungselementes 46 in eine entsprechende Nut des Spulenkörpers 14. Gemäß Fig. 15 ragt ein entsprechender Fortsatz des Spulenkörpers 14 in eine Nut des Drahtführungselementes 46.

In beiden Varianten ist eine einfache und schnelle Montage sowie eine gegenseitige Fixierung der Drahtführungselemente 46 und der Spulenkörper 14 möglich.

Ferner zeigen Fig. 14 und 15 eines der Verbindungselemente 16, welches zur Montage des Statorblechpaketes 11 genutzt wird. Diese Verbindungselemente 16 weisen, wie bereits beschrieben, entsprechende Schließringe 38 auf. Diese Schließringe 38 werden hier zur Positionierung und/oder Fixierung der Drahtführungselemente 46 verwendet. Dies erfolgt, indem die Drahtführungselemente 46 auf diese Schließringe 38 aufgesteckt werden.

Ferner zeigt die Zusammenschau auf Fig. 11 mit Fig. 14 und Fig. 15, dass die Drahtführungselemente 46 Dome 48 aufweisen. Diese Dome 48 sind integrale Fortsätze der Drahtführungselemente 46, die sich in Axialrichtung 5 in Richtung der Rotorscheibe 34 erstrecken.

Wie anhand von Fig. 2 gezeigt wurde, befindet sich die axiale und radiale Lagerung zwischen Rotor 17 und Stator 10 relativ weit in der Mitte. Dadurch könnte es zu einem Verkippen des Rotors 17 gegenüber dem Stator 10 kommen. Um dieses Verkippen zu begrenzen, sind die Dome 48 vorgesehen. Die Rotorscheibe 34 kann an diesen Domen 48 bei einem entsprechenden Verkippen aufliegen.

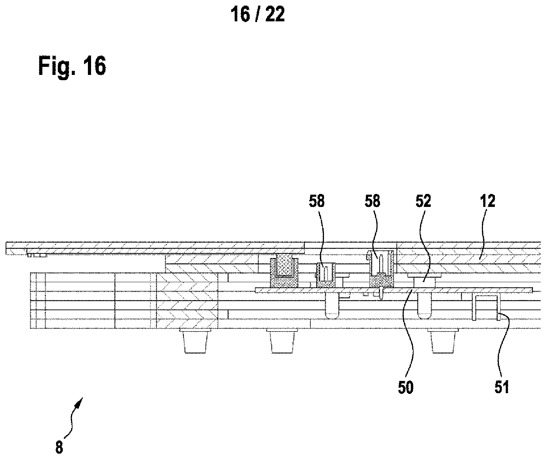

Fig. 16 zeigt im Detail eine Schnittansicht des Antriebs 8. Dieser Schnitt führt durch die in Fig. 11 gezeigte Leiterplatte 50. An der Leiterplatte 50 sind Anschlussstecker 58 ausgebildet. Diese ragen nach oben, also in Richtung der Statorscheibe 12. In der Statorscheibe 12 ist eine entsprechende Aussparung vorgesehen, so dass die Anschlussstecker 58 von oben zugänglich sind. Dabei zeigt Fig. 16 auch, dass die Anschlussstecker 58 nicht über die Statorscheibe 12 hinausragen und somit während des Transports geschützt angeordnet sind. Die beiden Anschlussstecker 58 dienen zur strom- und datenführenden Anbindung des Antriebs 8.

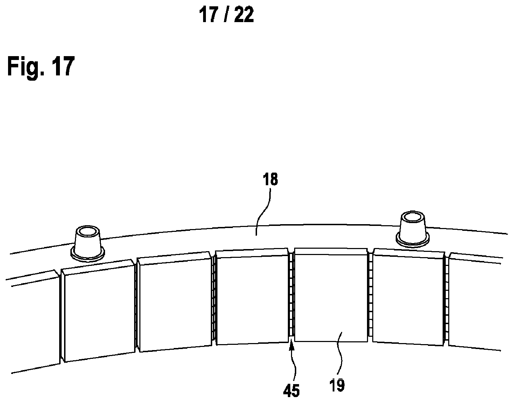

Anhand der Fig. 17 bis 22 werden unterschiedliche Varianten zur exakten Positionierung der Permanentmagneten 19 am Rotorblechpaket 18 beschrieben.

Gemäß Fig. 17 sind die Permanentmagneten 19 so groß ausgebildet, so dass sie unten auf der Rotorscheibe 34 aufliegen. Dadurch ist eine sehr einfache Montage gewährleistet, da die Permanentmagneten 19 selbst ihre Position definieren. Allerdings muss beachtet werden, dass die Permanentmagneten 19 umso teurer sind, je größer sie ausgeführt sind.

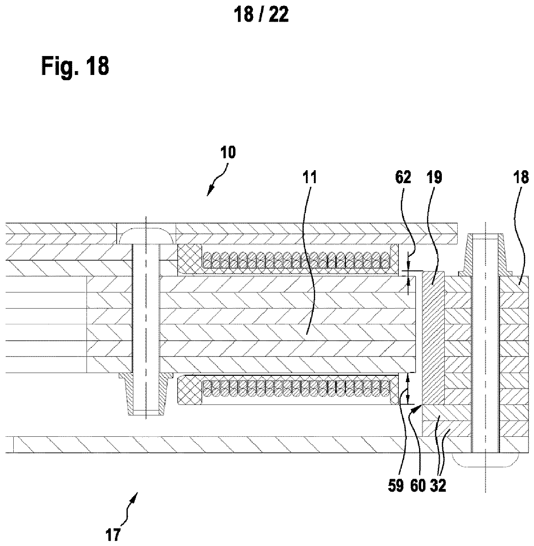

Fig. 18 zeigt eine zweite Variante. Gemäß dieser zweiten Variante ragen beispielsweise die zwei unteren Rotorringe 32 radial nach innen. Die unteren Rotorringe 32 bilden dabei einen axialen Anschlag 60 für die Permanentmagneten 19.

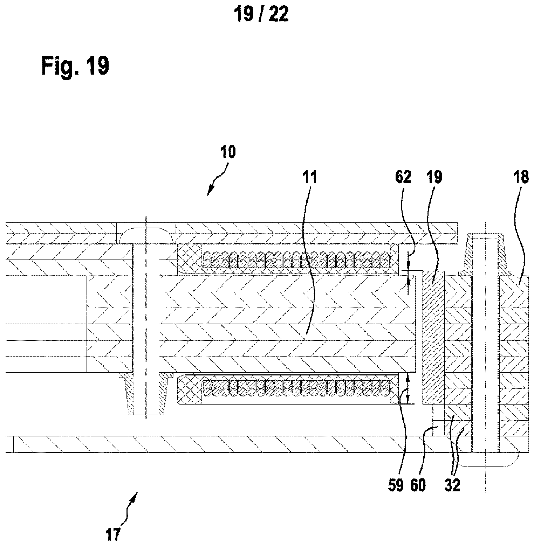

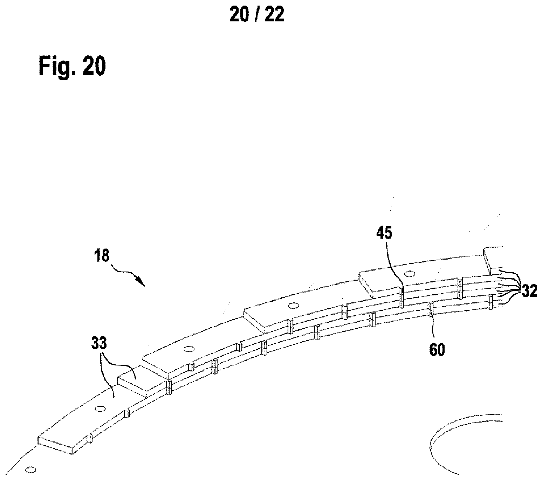

Eine dritte Variante zeigen die Fig. 19 und 20. Wie bereits beschrieben, können die einzelnen Rotorsegmente 33 kleine, radial nach innen ragende Positionierungsfortsätze 45 aufweisen. Wie die Fig. 19 und 20 zeigen, werden auch in dieser Variante die Positionierungsfortsätze 45 der meisten Rotorringe 32 für den Abstand zwischen den einzelnen Permanentmagneten 19 genutzt. Allerdings ist es möglich, beispielsweise in den untersten beiden Rotorringen 32 die Rotorsegmente 33 etwas versetzt anzuordnen, so dass hier die Positionierungsfortsätze 45 axial unterhalb der Permanentmagneten 19 angeordnet sind und somit als axialer Anschlag 60 dienen. Bei dieser Variante können weiterhin für die Rotorsegmente 33 Gleichteile verwendet werden. Lediglich für die unteren Rotorsegmente 33 müssen die Bohrungen für die Verbindungselemente 16 anders gesetzt werden.

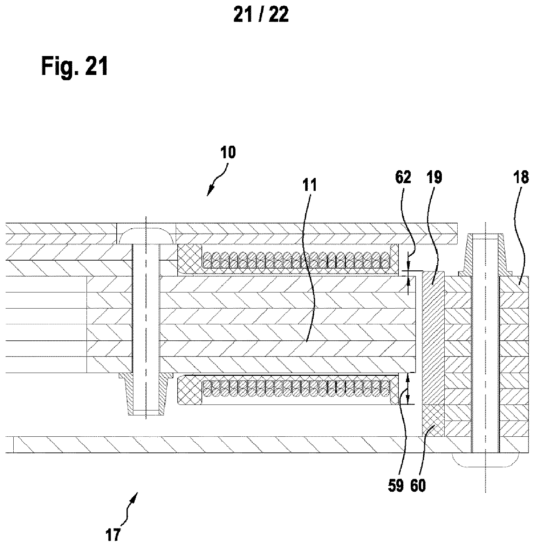

Fig. 21 zeigt eine dritte Variante. In der dritten Variante wird ein eigenes Bauteil, beispielsweise ein Kunststoffring, unterhalb der Permanentmagneten 19 eingesetzt. Hier bildet dieses zusätzliche Bauteil den axialen Anschlag 60.

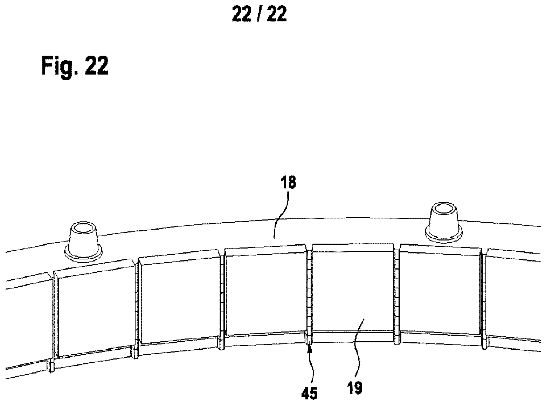

Fig. 22 zeigt eine fünfte Variante. In der fünften Variante wird der Abstand der Permanentmagneten 19 von der Rotorscheibe 34 während der Montage der Permanentmagneten 19 mit einer Lehre sichergestellt. Nachdem die Permanentmagneten 19 fixiert, beispielsweise auch verklebt, sind, kann diese Lehre entfernt werden und der Abstand bleibt erhalten.

Mit den unterschiedlichen Varianten wurde gezeigt, wie ein gewisser erster Überstand 59 der Permanentmagneten 19 erreicht werden kann. Gleichzeitig wird dabei auch der zweite Überstand 62 sichergestellt.

### Bezugszeichenliste

- A: Drehkreuzdurchmesser
- B: Rotordurchmesser
- C: Antriebshöhe
- D: Karusselltürrastzahl
- E: Auslegungskoeffizienten
- F: Spulenanzahl
- G: Statorsegmentanzahl
- H: Segmentwinkel
- I: Reduktionswinkel
- K: Kopfradius
- L: Zahnbreite
- M: Statordurchmesser
- N: Rotorsegmentanzahl
- T: Eckenradius
- U: Magnetanzahl

- 1: Karusselltür
- 2: Drehkreuz
- 3: Türflügel
- 4: Drehachse
- 5: Axialrichtung
- 6: Radialrichtung
- 7: Umfangsrichtung
- 8: Antrieb
- 9: Abtriebselement
- 10: Stator
- 11: Statorblechpaket
- 12: Statorscheibe
- 13: Spulen
- 14: Spulenkörper
- 15: Wicklung
- 16: Verbindungselemente (Schließringbolzensystem)
- 17: Rotor
- 18: Rotorblechpaket
- 19: Permanentmagneten
- 20: Axiallager
- 21: Radiallager
- 22: geschlossener Ring
- 23: Zähne
- 24: Statorring
- 25: Statorsegmente
- 26: Stöße
- 27: Verbindungslöcher
- 32: Rotorringe
- 33: Rotorsegmente
- 34: Rotorscheibe
- 36: Bolzen
- 37: Köpfe
- 38: Schließringe
- 39: erste Scheibenbleche
- 40: zweite Scheibenbleche
- 41: axialer Bauraum
- 42: radialer Bauraum
- 43: Bolzendurchmesser
- 44: Verbindungslochdurchmesser
- 45: Positionierungsfortsätze
- 46: Drahtführungselemente
- 47: Schlitze
- 48: Dome
- 49: Anlaufflächen
- 50: Leiterplatte
- 51: Schneidklemmen
- 52: Rastverbindung
- 53: Spulenkette
- 54: Verbindungstelle (Lötstelle)
- 55: Hohlraum
- 56: Drahtein-/-auslauf
- 57: direkte formschlüssige Verbindung
- 58: Anschlussstecker
- 59: erster Überstand
- 60: axialer Anschlag
- 62: zweiter Überstand

## Patentansprüche

1. Karusselltür (1) umfassend
• ein Drehkreuz (2) mit zumindest zwei Türflügeln (3), wobei das Drehkreuz (2) um eine Drehachse (5) drehbar ist, wobei entlang der Drehachse (5) eine Axialrichtung (5) und senkrecht zur Axialrichtung (5) eine Radialrichtung (6) definiert sind, und
• einen elektrischen Antrieb (8), ausgebildet als elektronisch kommutierter Vielpolmotor mit einem Stator (10) umfassend ein Statorblechpaket (11) und mehrere Spulen (13), und einem Rotor (17), umfassend ein Rotorblechpaket (18) und mehrere Permanentmagneten (19),
• wobei der Rotor (17) koaxial zur Drehachse angeordnet ist, und mit dem Drehkreuz (2) zum direkten, getriebelosen Antrieb verbunden ist, wobei
• die Permanentmagneten (19) mit einem ersten Überstand (59) in Axialrichtung (5) über das Statorblechpaket (11) überstehen, sodass der Rotor (17) allein durch die Magnetkraft an dem Stator (10) gehalten werden kann,
**dadurch gekennzeichnet,**
• **dass** die Permanentmagneten (19) an der gegenüberliegenden Seite zum ersten Überstand (59) um einen zweiten Überstand (62) in Axialrichtung (5) über das Rotorblechpaket (18) überstehen, sodass die Permanentmagnete (19) mit einem Sensor erfasst werden können.

2. Karusselltür (1) nach Anspruch 1, **dadurch gekennzeichnet, dass** der erste Überstand (59) zumindest 2mm, vorzugsweise zumindest 4mm, besonders vorzugsweise zumindest 6mm, beträgt.

3. Karusselltür (1) nach Anspruch 1 oder 2, **dadurch gekennzeichnet, dass** das Statorblechpaket (11) einen geschlossenen Ring (22) und radiale Zähne (23) zum Aufstecken der Spulen (13) umfasst, wobei das Statorblechpaket (11) aus mehreren gestapelten Statorringen (24) zusammengesetzt ist, und wobei vorzugsweise der einzelne Statorring (24) aus mehreren in Umfangsrichtung nebeneinander angeordneten Statorsegmenten (25) zusammengesetzt ist.

4. Karusselltür (1) nach einem der vorhergehenden Ansprüche, **dadurch gekennzeichnet, dass** das Rotorblechpaket (18) mehrere gestapelte Rotorringe (32) umfasst, wobei der einzelne Rotorring (32) vorzugsweise aus mehreren in Umfangsrichtung nebeneinander angeordneten Rotorsegmenten (33) zusammengesetzt ist, und wobei an der radialen Innenseite des Rotorblechpaketes (18) die Permanentmagneten (19) angeordnet sind.

5. Karusselltür (1) nach einem der vorhergehenden Ansprüche, **dadurch gekennzeichnet, dass** an der radialen Innenseite des Rotorblechpaketes (18) mehrere Positionierungsfortsätze (45), vorzugsweise als integrale Bestandteile der Rotorsegmente (33), ausgebildet sind, wobei jeweils zwischen zwei Positionierungsfortsätzen (45) ein Permanentmagnet (19) angeordnet ist.

6. Karusselltür (1) nach einem der vorhergehenden Ansprüche, **dadurch gekennzeichnet, dass** die Permanentmagneten (19) in Umfangsrichtung voneinander beabstandet sind, wobei der Abstand zumindest teilweise mit Kunststoff oder Klebstoff vergossen ist.

7. Karusselltür (1) nach einem der vorhergehenden Ansprüche, **dadurch gekennzeichnet, dass** die Permanentmagneten (19) an ihrer radialen Außenseite direkt am Rotorblechpaket (18) anliegen und radial nicht mit dem Rotorblechpaket (18) verklebt sind.

8. Karusselltür (1) nach einem der vorhergehenden Ansprüche, **dadurch gekennzeichnet, dass** an der radialen Innenseite des Rotorblechpaketes (18) ebene, zueinander abgewinkelte Auflageflächen für die Permanentmagneten (19) ausgebildet sind, und die Permanentmagneten (19) an ihrer radialen Außenseite, vorzugsweise auch an ihrer radialen Innenseite, eben sind.

9. Karusselltür (1) nach einem der vorhergehenden Ansprüche, **dadurch gekennzeichnet, dass** am Rotor ein axialer Anschlag (60) für die Permanentmagneten (19) ausgebildet ist.

10. Karusselltür (1) nach Anspruch 9, **dadurch gekennzeichnet, dass** das Rotorblechpaket (18) auf einer Rotorscheibe (34) montiert ist, wobei der axiale Anschlag (60) gebildet ist durch
• zumindest einen Rotorring (32) der zumindest stellenweise in Radialrichtung weiter nach innen ragt als die verbleibenden Rotorringe (32), oder
• durch zumindest ein zwischen die Permanentmagneten (19) und die Rotorscheibe (34) eingesetztes Abstandselement.

## Claims

1. A revolving door (1), comprising
• a turnstile (2) having at least two door leaves (3), wherein the turnstile (2) is rotatable about an axis of rotation (4), wherein are defined an axial direction (5) along the axis of rotation (4) and a radial direction (6) vertically with regard to the axial direction (5), and
• an electrical drive (8) formed as an electronically commuted multi-pole motor having a stator (10) comprising a laminated stator core (11) and several coils (13), and a rotor (17) comprising a laminated rotor core (18) and several permanent magnets (19),
• wherein the rotor (17) is disposed coaxially with regard to the axis of rotation, and is connected to the turnstile (2) for the direct gear-less drive, wherein
• the permanent magnets (19) with a first protrusion (59) protrude in axial direction (5) beyond the laminated stator core (11), so that the rotor (17) can be retained at the stator (10) just by the magnetic force,
**characterized in**
• **that**, at the side opposite the first protrusion (59), the permanent magnets (19) protrude in axial direction (5) by a second protrusion (62) beyond the laminated rotor core (18), so that the permanent magnets (19) can be detected with a sensor.

2. The revolving door (1) according to claim 1, **characterized in that** the first protrusion (59) amounts at least to 2 mm, preferably at least to 4 mm, particularly preferred at least to 6 mm.

3. The revolving door (1) according to claim 1 or 2, **characterized in that** the laminated stator core (11) comprises a closed ring (22) and radial teeth (23) for placing the coils (13) thereon, wherein the laminated stator core (11) is composed of several stacked stator rings (24), and wherein preferably the individual stator ring (24) is composed of several stator segments (25) disposed next to each other in circumferential direction.

4. The revolving door (1) according to any of the preceding claims, **characterized in that** the laminated rotor core (18) comprises several stacked rotor rings (32), wherein, preferably, the individual rotor ring (32) is composed of several rotor segments (33) disposed next to each other in circumferential direction, and wherein the permanent magnets (19) are disposed at the radial inner side of the laminated rotor core (18).

5. The revolving door (1) according to any of the preceding claims, **characterized in that** are formed at the radial inner side of the laminated rotor core (18) several positioning extensions (45), preferably as integral components of the rotor segments (33), wherein respectively one permanent magnet (19) is disposed between two positioning extensions (45).

6. The revolving door (1) according to any of the preceding claims, **characterized in that** the permanent magnets (19) are spaced apart from each other in circumferential direction, wherein the distance is at least partially filled with plastic material or adhesive.

7. The revolving door (1) according to any of the preceding claims, **characterized in that**, at the radial outer side thereof, the permanent magnets (19) directly rest at the laminated rotor core (18), and are not radially bonded to the laminated rotor core (18).

8. The revolving door (1) according to any of the preceding claims, **characterized in that** at the radial inner side of the laminated rotor core (18), flat resting surfaces angled with regard to each other are formed for the permanent magnets (19), and the permanent magnets (19) are flat at the radial outer side thereof, preferably also at the radial inner side thereof.

9. The revolving door (1) according to any of the preceding claims, **characterized in that** an axial abutment (60) is formed for the permanent magnets (19) at the rotor.

10. The revolving door (1) according to claim 9, **characterized in that** the laminated rotor core (18) is mounted on a rotor disc (34), wherein the axial abutment (60) is formed by
• at least one rotor ring (32), which at least in some locations in radial direction projects further inwards than the rest of the rotor rings (32), or
• by at least one spacer element inserted between the permanent magnets (19) and the rotor disc (34).

## Revendications

1. Porte tambour (1), comportant
• un tourniquet (2) ayant au moins deux vantaux de porte (3), le tourniquet (2) étant rotatif autour d'un axe de rotation (4), dans lequel sont définies le long de l'axe de rotation (4), une direction axiale (5), et verticalement par rapport à la direction axiale (5) une direction radiale (6), et
• un entraînement électrique (8) aménagé comme moteur multipôles à commutation électronique avec un stator (10) comportant un empilage de tôles de stator (11) et plusieurs bobines (13), et un rotor (17) comportant un empilage de tôles de rotor (18) et plusieurs aimants permanents (19),
• le rotor (17) étant agencé coaxialement par rapport à l'axe de rotation et étant connecté au tourniquet (2) pour l'entraînement direct sans engrenage,
• les aimants permanents (19) avec une première projection (59) en direction axiale (5) faisant saillie au delà de l'empilage de tôles de stator (11) de sorte que le rotor (17) peut être maintenu seulement par la force magnétique sur le stator (10),
**caractérisée en ce**
• **que** les aimants permanents (19) sur la face opposée vers la première projection (59) avec une deuxième projection (62) en direction axiale (5) font saillie au-delà de l'empilage de tôles de rotor (18) de sorte que les aimants permanents (19) peuvent être détectés avec un capteur.

2. Porte tambour (1) selon la revendication 1, **caractérisée en ce que** la première projection (59) est au moins de 2 mm, de préférence au moins de 4 mm, tout particulièrement au moins de 6 mm.

3. Porte tambour (1) selon la revendication 1 ou 2, **caractérisée en ce que** l'empilage de tôles de stator (11) comporte un anneau fermé (22) et des dents radiales (23) pour le garnissage des bobines (13), l'empilage de tôles de stator (11) étant composé de plusieurs anneaux de stator (24) empilés, et de préférence l'anneau de stator (24) individuel étant composé de plusieurs segments de stator (25) agencés l'un à côté de l'autre dans la direction circonférentielle.

4. Porte tambour (1) selon l'une des revendications précédentes, **caractérisée en ce que** l'empilage de tôles de rotor (18) comporte plusieurs anneaux de rotor (32) empilés, l'anneau de rotor (32) individuel étant composé de préférence de plusieurs segments de rotor (33) agencés l'un à côté de l'autre dans la direction circonférentielle, et les aimants permanents (19) étant agencés sur la face radiale intérieure de l'empilage de tôles de rotor (18).

5. Porte tambour (1) selon l'une des revendications précédentes, **caractérisée en ce que** sur la face radiale intérieure de l'empilage de tôles de rotor (18) sont aménagés plusieurs prolongements de positionnement (45), de préférence comme parties intégrales des segments de rotor (33), un aimant permanent (19) étant agencé respectivement entre deux prolongements de positionnement (45).

6. Porte tambour (1) selon l'une des revendications précédentes, **caractérisée en ce que** les aimants permanents (19) sont espacés l'un de l'autre en la direction circonférentielle, la distance étant au moins partiellement remplie de matière plastique ou d'adhésive.

7. Porte tambour (1) selon l'une des revendications précédentes, **caractérisée en ce que**, sur la face radiale extérieure, les aimants permanents (19) restent directement contre l'empilage de tôles de rotor (18) et ne sont pas collés radialement à l'empilage de tôles de rotor (18).

8. Porte tambour (1) selon l'une des revendications précédentes, **caractérisée en ce que**, sur la face radiale intérieure de l'empilage de tôles de rotor (18) sont aménagées des surfaces d'appui plates coudées les unes aux autres pour les aimants permanents (19) et les aimants permanents (19) sont plates à leur face radiale extérieure, de préférence aussi à leur face radiale intérieure.

9. Porte tambour (1) selon l'une des revendications précédentes, **caractérisée en ce que** sur le rotor est aménagée une butée axiale (60) pour les aimants permanents (19).

10. Porte tambour (1) selon la revendication 9, **caractérisée en ce que** l'empilage de tôles de rotor (18) est monté sur un dise de rotor (34), la butée axiale (60) étant aménagée par
• au moins un anneau de rotor (32), lequel au moins à certains endroits en direction radiale fait plus saillie vers l'intérieur que le reste des anneaux de rotor (32), ou
• par au moins un élément d'espacement inséré entre les aimants permanents (19) et le dise de rotor (34).
